(19)

Europäisches
Patentamt

European
Patent Office

Office européen
des brevets

(11) **EP 3 671 255 A1**

(12) **EUROPEAN PATENT APPLICATION**

(43) Date of publication:
**24.06.2020  Bulletin 2020/26**

(51) Int Cl.:
**G01S 5/14** *(2006.01)*   **G01S 5/16** *(2006.01)*
**G01S 5/30** *(2006.01)*

(21) Application number: **18214798.3**

(22) Date of filing: **20.12.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **FREQUENTIS COMSOFT GmbH
76227 Karlsruhe (DE)**
• **Karlsruher Institut für Technologie (KIT)
76131 Karlsruhe (DE)**

(72) Inventors:
• **HANEBECK, Uwe
76337 Waldbronn (DE)**
• **FRISCH, Daniel
76137 Karlsruhe (DE)**
• **NOACK, Benjamin
76185 Karlsruhe (DE)**
• **SHARPLES, Mike
76297 Stutensee (DE)**

(74) Representative: **Vossius & Partner
Patentanwälte Rechtsanwälte mbB
Siebertstrasse 3
81675 München (DE)**

(54) **METHOD FOR DETERMINING THE LOCATION OF A PLURALITY OF TARGETS**

(57)     The invention provides a method for determining the location of at least one target among a plurality of targets sending messages without unique identifiers for relating a message to a respective target, wherein the method comprises the steps of: receiving a plurality of said messages from the at least one target by at least two sensors at known locations (s1 to sS); obtaining time of arrival measurements (m1 to mP) from the received messages; obtaining at least one initial hypothetical location of the at least one target; calculating expected time of arrival measurements (em1 to emP) at each sensor based on the at least one initial hypothetical set of locations of the at least one target, the sensor locations, and the propagation velocity of the messages; determining the deviation between the expected time of arrival measurements (em1 to emP) and the time of arrival measurements (m1 to mP) obtained from the received messages at each sensor based on a permutation-invariant distance measure; determining the locations of the at least one target by modifying the at least one initial hypothetical location of the at least one target to minimize the permutation invariant distance measure between the time of arrival measurements (m1 to mP) and the expected time of arrival measurements (em1 to emP).

Fig. 2

**Description**

The present invention relates to a method for determining the location of at least one target among a plurality of targets sending messages without unique identifiers for relating a message to a respective target. More particularly, the present invention relates to a method for determining the location of at least one aircraft among a plurality of aircraft sending messages without unique identifiers for relating a message to a respective aircraft.

Multilateration as a method for measuring the position of one or more targets (e.g. vehicles, sea vessels or aircraft) finds increasing use in the field of Traffic Control, for example Air Traffic Control (ATC) as an application of Secondary Surveillance Radar (SSR).

A known technique can determine the position of the signal source after measuring the time of arrival (TOA) of a signal at multiple distributed sensors with synchronized clocks.

The technique may use the point in time the interrogator sent its request if this is known (active multilateration). Another technique can determine a position if no time of transmission of the interrogator or target is known (passive multilateration). Active multilateration is normally achieved by including one or more interrogators as part of the system to trigger the transmissions from the signal source i.e. the target to be located.

To perform a multilateration position measurement in three dimensions (e.g. latitude, longitude and altitude), it is normally required to have a minimum of four receiving stations (passive multilateration) or three receiving stations and one interrogator station (active multilateration). There are well-established mathematical equations where one puts in the locations of the receiving stations, and the reception time of the target's signal at each receiving station, and obtains the target's location.

Additional stations above this minimum can be used to improve accuracy and are often also required to achieve a specified level of redundancy in event of station failures. The ideal method (Maximum Likelihood / Weighted Least Squares) to include redundant measurements cannot be solved analytically but needs to be solved iteratively, e.g. with the Levenberg-Marquardt algorithm: For a given target position, one can calculate the TOA that would be expected at each receiving station. Then these calculated TOA are compared to the actually measured TOA by summing up their quadratic differences, getting a single value, the residual norm, that reflects the optimality of the given target position - for a perfect match given an exact target position and exact measurements, it would be zero. The Levenberg-Marquardt algorithm basically tests a number of arbitrary target positions, compares their optimality with respect to the recorded measurements and, similar to a skier, moves downhill, until its finds a target position, where the optimality measure is locally or globally optimal. In the end a target position is obtained, where the expected TOA agrees well with the actually measured TOA.

However, the final residual norm will never be zero in practice, because the TOA measurements are always inaccurate. Based on the typical measurement error and the number of measurements used, one can infer a residual norm range that correct solutions will typically have by using the chi-squared distribution. If the measurement error margin is known for every receiver or even each message individually (based on signal quality and sensor clock synchronization accuracy, for example), the single terms constituting the residual norm (the quadratic differences between calculated TOA and measured TOA) can also be individually weighted with the inverse variance of the messages before summing them up to the residual norm, to reflect their significance. An uncertain message with a bigger variance will then contribute less to the residual norm.

Performing a position measurement using multilateration normally requires that a transmission from the source can be identified as being from that source and no other. The signal should therefore contain sufficient unique information to identify the source unambiguously.

Multilateration systems typically use omni-directional or wide-angle receivers. Consequently, there is little or no directional discrimination for identifying a signal source. The only discriminators are therefore signal content and signal power. Some targets do not transmit a unique signal, and thus a high level of ambiguity can occur.

If transmissions of identical content arrive within a small separation in time at a receiving station, there exists the possibility to associate a wrong transmission to a target and hence calculate an incorrect position, wherein a small separation in time means a time interval of the same order as the time differences measured across the multiple receiving stations for normal multilateration position determination (typically about 0.5 ms). If such identical-looking transmissions arrive at multiple receiving stations, then the opportunity for ambiguous associations increases greatly.

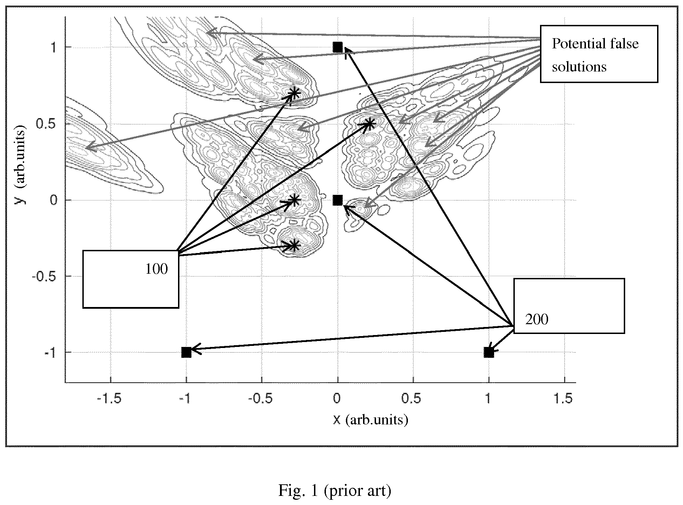

A mathematical model demonstrating the level of ambiguity introduced by such effects is shown in Fig. 1. In particular, Fig. 1 shows a situation with four targets 100 and four receiving stations 200. The contours identify multiple regions where targets would be identified using the traditional TDOA (time difference of arrival) formulas. Besides the true target locations 100, many potential false solutions are indicated here, that are based on wrong measurement associations. One common approach is to calculate all the solutions allowed by the traditional TDOA formulas (containing the correct as well as the false ones) and hope that a subsequent tracker algorithm will eliminate the false solutions because they wouldn't form a reasonable track over time.

In a Civil ATC environment, this effect has been demonstrated as a significant problem in some scenarios. For example, it is common practice for light flight vehicles to operate with a common (i.e. non-unique) identity known as "conspicuity". In this situation, when these aircraft are interrogated they will transmit their "conspicuity". They may also transmit their altitude. If the aircraft report the same altitude or do not report their altitude, then their transmissions become non-unique. The transmissions will often be triggered by the same interrogation signal and so will be received within a small separation in time. Consequently, the ambiguity problem shown in Fig. 1 occurs.

It has been demonstrated that false positions calculated in this way can be sustained over an extended period sufficient to create plausible and disruptive false targets in the air situation display of an ATC environment.

In other words, the prior art systems usually make use of the reception of messages that are sent by every target for locating the targets, wherein the messages usually contain a unique identifier, which relates the message to a particular one of the target. For this purpose, each target is usually provided with a unique identifier, which is then included in the respective message to relate the received message to a particular target. If, however, no identifier is assigned to more than one target or the targets are assigned the same identifier, the prior art systems cannot easily relate the messages to the targets.

For example, US 6,704,692 B1 relates to a method and system for solving a combinatorial optimization problem to select from a larger set, a plurality of associations of measurements taken of a plurality of objects and, more particularly, to a method and system for constructing a plurality of updated tracks based upon associations of a plurality of measurements of a plurality of objects.

In addition, US 2008/0111730 A1 relates to a method that includes associating a measurement with a track, generating measurement association statistics for the track, generating and updating a track quality value for a track based on a measurement-to-track association likelihood, and updating track lists based on the track quality value and the measurement association statistics of the tracks in these lists.

US 5,454,720 A relates to a method for providing detection of timing anomalies and eliminating falsely detected positions in a hyperbolic positioning system for a simulated battlefield system. The method selects a large number of transmitters for calculation of position of an object or person on the battle field. In addition, transmitters are selected which have a high dilution of precision factor.

Moreover, US 7,132,982 B2 relates to a direct multilateration target tracking system with the TOA time stamp as an input. A technique of tracking targets with varying receiver combinations is described. Methods of correlating and combining Mode A, Mode C, and Mode S messages to enhance target tracking in a passive surveillance system are described.

It is an object of the present invention to provide a method to determine the location of at least one target among a plurality of targets sending out messages that do not contain a unique identifier. The object is achieved by the features of the independent claims. Dependent claims relate to further embodiments of the present invention.

According to a first aspect the present invention provides a method for determining the location of at least one target among a plurality of targets sending messages without unique identifiers for relating a message to a respective target, wherein the method comprises the steps of: receiving a plurality of said messages from the at least one target by at least two sensors at known locations (s1 to sS); obtaining time of arrival measurements (m1 to mP) from the received messages; obtaining at least one initial hypothetical location of the at least one target; calculating expected time of arrival measurements (eml to emP) at each sensor, respectively, based on the initial hypothetical set of locations of the at least one target, the sensor locations, and the propagation velocity of the messages; determining the deviation between the expected time of arrival measurements (em1 to emP) and the time of arrival measurements (m1 to mP) obtained from the received messages at each sensor based on a permutation-invariant distance measure; determining the location of the at least one target by modifying the at least one initial hypothetical location of the at least one target to minimize the permutation invariant distance measure between the time of arrival measurements (m1 to mP) and the expected time of arrival measurements (em1 to emP).

As outlined above, for three dimensional (e.g. latitude, longitude and altitude) location determination, it is preferred to have at least four sensors (passive multilateration) or three sensors and one interrogator (active multilateration). However, for two dimensional (e.g. latitude, longitude) location determination, it is preferred to have at least three sensors (passive multilateration) or two sensors and one interrogator (active multilateration).

The interrogator may be adapted to send a signal (e.g. a request) to the at least one target, which initiates the at least one target to send a respective message to the sensors.

The interrogator may be combined with one of the sensors. That is, the interrogator and one of the sensors may be integrally formed.

Thus, the minimum amount of sensors to be used by the present invention is two sensors for two dimensional location determination and three sensors for three dimensional location determination in the case of active multilateration, where an interrogator may be used in addition or being integrated in one of the sensor.

In case of passive multilateration, the minimum amount of sensors to be used by the present invention is three sensors for two dimensional location determination and four sensors for three dimensional location determination.

In some aspects of the present invention, a higher number of sensors may be used to increase the accuracy of the location determination. For example, the present invention may employ three, four, five or more sensors for two dimensional location determination in active multilateration. In addition, the present invention may employ four, five, six or more sensors for three dimensional location determination in active multilateration.

Moreover, the present invention may employ four, five, six or more sensors for two dimensional location determination in passive multilateration. In addition, the present invention may employ five, six, seven or more sensors for three dimensional location determination in passive multilateration.

The targets may be any vehicle, such as aircraft, drones, ships, cars etc., that are either manned or unmanned.

The method for determining the location of at least one target among a plurality of targets sending messages without unique identifiers for relating a message to a respective target may also referrred to as a method of performing multilateration using association-free times of arrival (TOA).

The at least one target among the plurality of targets may preferably be two or more targets.

That is, the aforementioned messages without unique identifiers for relating a message to a respective target may be referred to as association-free times of arrival messages in a method of multilateration.

When referring to "messages without unique identifiers", it is to be understood that such messages send by the targets may be any signal that can be received by the respective sensors and does not contain any information on the target the signal stems from. In other words, two or more signals sent by two or more targets may not be distinguishable from one another merely by its content. That is, the signals (messages) may be distinguishable by its signal strength or other additional parameters as described above, however, the signals do not contain an unambiguous identifier, that is imposed by the respective target.

The "messages without unique identifiers" relate to signals that are free of a unique identifier, the signal source, i.e. the targets, may impose on the signal for relating the signal to a specific target.

The above mentioned parameters of the sender locations, the sending time, and the propagation velocity of the messages may be known or estimated.

The propagation velocity of the messages, e.g. the speed of light or the speed of sound in the respective medium the message is traveling through.

The time of arrival measurement may be selected from one or more of the following: time of arrival of an electromagnetic wave, time of arrival of a light pulse, time of arrival of an acoustic wave.

The permutation-invariant distance measure may be selected from any one or a combination of the following: Wasserstein distance, calculated by testing all permutations combinatorically or sorting of the measurements or using the Hungarian algorithm or the Auction algorithm or the simplex algorithm; and Localized Cumulative Distribution (LCD) distance; and local nearest neighbor distance; and OSPA (optimal sub-pattern assignment) metric; and bounded distance; and cropped distance.

Minimizing the permutation invariant distance measure may comprise any one or a combination of the following methods: analytical closed-form solution, Newton algorithm, Gauss-Newton algorithm, quasi-Newton method, Levenberg-Marquardt algorithm, Sequential Quadratic Programming, Active-Set algorithm, Trust-Region algorithms, Interior-Point algorithm, and Nelder-Mead method.

The initial hypothetical set of locations may be selected by any one or a combination of the following methods: random, deterministic grid, and past target positions.

Obtaining the initial hypothetical set of locations may also comprise a step of simplifying the permutation-invariant distance measure, wherein only one target location and a limited number of the at least two sensors are taken into account to obtain a lower bound for the permutation-invariant distance measure.

The simplified permutation-invariant distance measure may be advantegous in different aspects of the present invention. For example, the simplified permutation-invariant distance measure may be helpful for at least one of: determining the number of targets, finding suitable locations for the initial hypothetical set of locations, proving that there is no target at a given location and saving computational load. Saving computational load may be advantagous in particular for realtime applications of the present invention.

By way of example, if the number of targets is unknown, obtaining the at least one initial hypothetical location may comprise a step of simplifying the permutation-invariant distance measure, wherein only one target location and a limited number of the at least two sensors are taken into account to obtain a lower bound for the permutation-invariant distance measure.

The aforementioned limited number of the at least two sensors taken into account may be 3 sensors, preferably 4 sensors, more preferably 5 sensors and most preferably 6 sensors. That is, the permutation-invariant distance measure, i.e. the distance of the one expected measurement (expected time of arrival measurements) to the closest real measurement (time of arrival measurements), may be obtained for every sensor, but only the senors, where this nearest-neighbor-distance is smallest, may be taken into account.

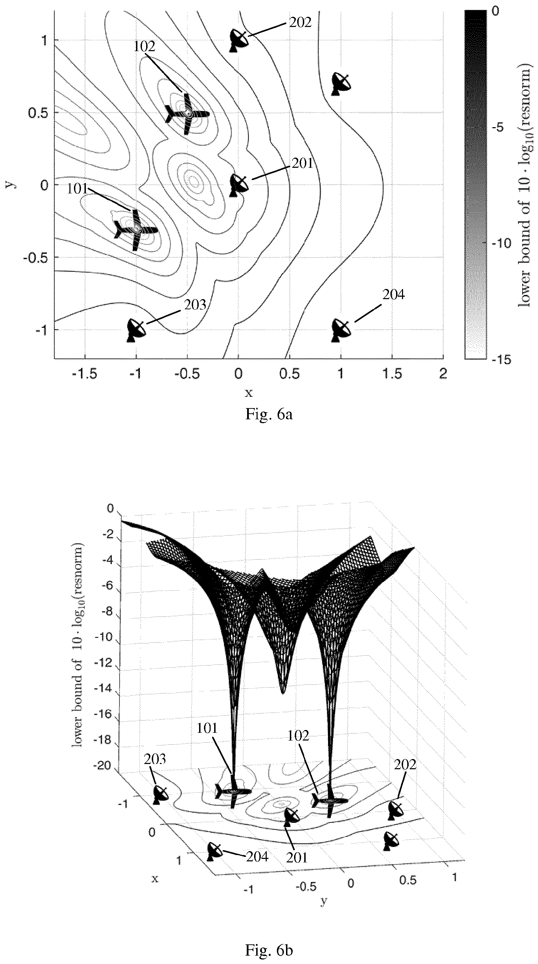

This simplification may be used for creating a human-readable 2D contour line plot as in Fig.6a or a 3D surface plot as in Fig.6b, or for finding suitable initial points, or for estimating the number of targets present.

The method may further comprise estimating the uncertainties of the time of arrival measurements (m1 to mP) and projecting the estimated measurement uncertainties to the determined locations of the at least one target to obtain an estimate of the accuracy of the determined location of the at least one target.

Estimating and projecting the uncertainties may comprise any of the following: Monte Carlo simulation, stochastic sampling, deterministic sampling, Cramer Rao bound, and based on a linearization with the Jacobi matrix of the nonlinear position-to-measurement mapping.

To avoid the inversion of a singular matrix when projecting the uncertainties with the linearization approach, regularization may be applied before taking the inverse matrix, or the singular value decomposition may be employed.

According to the method of the present invention, if the number of targets present is unknown, the number of targets has to be hypothesized to get a quality measure of that specific target arrangement. The method may be repeated for any number of targets.

After the solutions for any number of assumed targets are available, one number of targets can then be selected based on one or a combination of the following properties of the solutions: residual norm, chi-squared distribution's cumulative distribution function of the residual norm, estimated uncertainty of the solution, number of measurements associated to a target, number of measurements not associated to a target, number of missing measurements, target-to-sensor distance, and previous number of targets.

The permutation-invariant distance measure may comprise comparing two sets of time of arrival measurements (m1 to mP) that have a different number of entries to account for missing measurements.

The method may further comprise obtaining clutter measurements in addition to the time of arrival measurements (m1 to mP), wherein the permutation-invariant distance measure comprises either not associating the clutter measurement to any target at all, or associating the clutter measurements to a non-existing virtual target, wherein the method determines the location of the virtual target in the same manner as the at least one target and wherein the location of the virtual target is discarded based on an obtained residual norm, estimated uncertainty of the solution, or the number of clutter measurements it is based on.

Determining the locations of the at least one target may further comprise minimizing the distance between the determined location of the at least one target and target position predicted based on any information from the past about the target's positions, velocities, accelerations, and/or curve radii.

As mentioned above, the at least two sensors may be three or more sensors, preferably four or more sensors in the case of 2D localization, and may be four or more sensors, preferably five or more sensors, for 3D localization.

According to a second aspect, the present invention provides a computer program product comprising instructions which, when the program is executed by a computer, cause the computer to carry out the steps of the above described method according to the first aspect of the present invention.

Thus, the present invention provides for an improved localization of at least one target, where no unique identifier is contained in the messages received at respective sensor locations. Further advantages may be apparent to a person skilled in the art from the description of the present invention herein.

## BRIEF DESCRIPTION OF THE DRAWINGS

The present invention is further described with respect to embodiments by referring to the Figures, where

Fig. 1 illustrates the performance of a prior art system for determining the locations of a plurality of targets,

Figs. 2 shows a system for determining the location of a plurality of targets according to an embodiment of the present invention,

Figs. 3 shows a diagram of the measured TOAs in accordance with the embodiment of Fig. 2,

Figs. 4 shows a block diagram according to an embodiment the present invention,

Fig. 5 shows a block diagram according to a further embodiment the present invention,

Figs. 6a-b show residual norms as obtained by an embodiment of the present invention, particularly the simplified permutation-invariant distance measure, wherein Fig. 6a shows a contour line plot and Fig. 6b shows a respective 3D surface plot of the same data, and

Fig. 7 shows the accuracy of the estimated target positions obtained by an embodiment of the present invention depending on the measurement error for the target and sensor arrangement as shown in Fig. 2 and Fig. 3.

**DETAILED DESCRIPTION OF PREFERRED EMBODIMENTS**

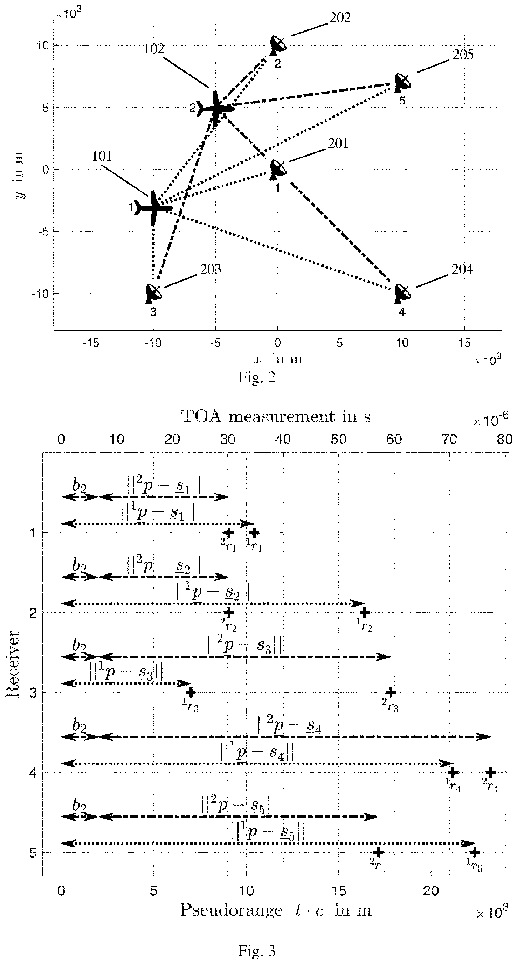

Some preferred embodiments are now described with reference to Figs. 2-6. For explanation purpose, various specific details are set forth, without departing from the scope of the present invention as claimed.

Fig. 2 shows an example embodiment with two aircraft 101, 102 and five sensors 201-205. The basic measurement model is given according to the equation:

$$^jr_i = \left\| ^j\underline{p} - \underline{s}_i \right\| + {}^jb = \sqrt{\left( ^jp_x - s_x^i \right)^2 + \left( ^jp_y - s_y^i \right)^2 + \left( ^jp_z - s_z^i \right)^2} + {}^jb,$$

$$^j\underline{p} = \begin{bmatrix} ^jp_x \\ ^jp_y \\ ^jp_z \end{bmatrix}$$

where ⎣ ⎦ is the (sought) position of aircraft $j$ (here $j \in \{1,2\}$)

and $^jb$ is an (also unknown) offset parameter, wherein $^jb/c$ is the point in time when aircraft j sent its signal.

$$\underline{s}_i = \begin{bmatrix} s_x^i \\ s_y^i \\ s_z^i \end{bmatrix}.$$

The receiver $i$ (here $i \in \{1,2,3,4,5\}$) is located at

The time of arrival (TOA) of the signal at the receiver $i$ is $^jt_i$, which is the actual measurement. For convenience, the TOA is multiplied with the speed of light $^jr_i = {}^jt_j \cdot c$.

In case of an acoustic wave, the speed of light would have to be replaced by the speed of sound.

For multilateration, the TDOA approach is very popular, where two TOAs are subtracted from one another. That way, the unknown offset $^jb/c$ vanishes from the above measurement equation. But with multiple targets and ambiguous identities, one might subtract the TOA of two different aircraft, and end up with a wrong equation since $^{j_1}b \neq {}^{j_2}b$. Thus, the present invention employs the TOA directly without the aforementioned subtraction.

Fig. 3 shows a respective diagram of the measured TOAs in accordance with the embodiment of Fig. 2, i.e. with two aircraft 101, 102 and five sensors 201-205. As can be seen from Fig. 3 there are two measurements for each receiver 1-5 (sensors 201-205). The upper one of each of the two measurements relates to the second aircraft 102 and the lower one of each of the two measurements relates to the first aircraft 101, which can also be identified by the respective indices of $j$, where $j$=1 indicates the first aircraft 101 and $j$=2 indicates the second aircraft 102. If the measurement coming from aircraft 101 cannot be distinguished from the measurement coming from aircraft 102 (conspicuity), the sensors are not aware of his association, though - they only see two measurements each.

In the example of Fig. 3, the unknown offset $b_2$ for the second aircraft 102 is non-zero, whereas the respective unknown offset $b_1$ for the first aircraft 101 is zero and thus not indicated in Fig. 3.

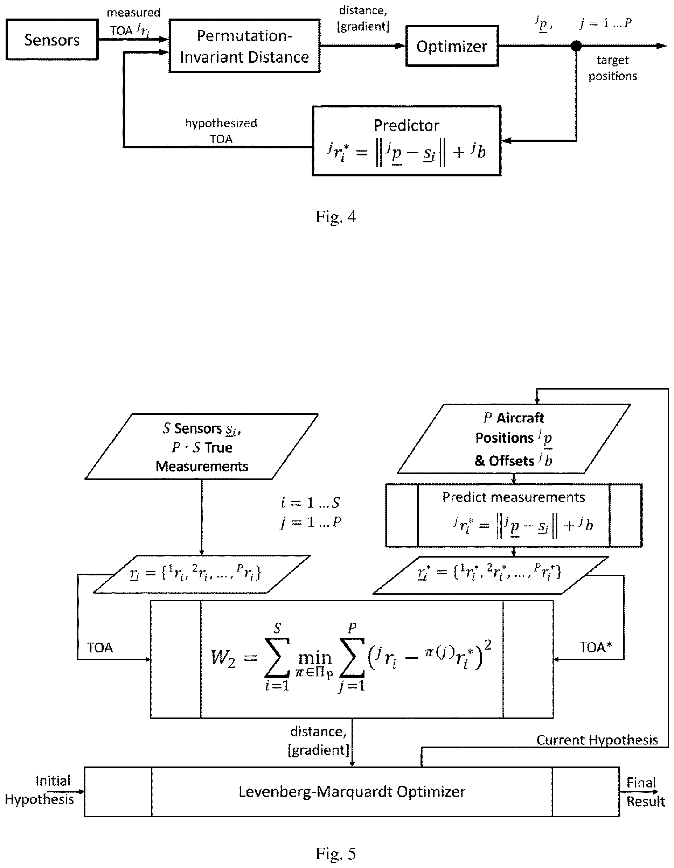

Fig. 4 shows a block diagram of the underlying general concept of the present invention for localization with "Association Free Times of Arrival" measurements using a permutation-invariant distance measure. In addition, Fig. 5 shows the more detailed and more specific corresponding multilateration algorithm employing the Wasserstein Distance measure.

With reference to Figs. 4 and 5, an embodiment of the present invention is now described in detail, which may solve the ambiguity of non-unique signals. In addition, the method is not limited to one target and one measurement per sensor. Multiple targets with ambiguous identities can be localized instantaneously.

As can be seen from Fig. 4, the Permutation-Invariant Distance module receives the measured TOAs $^jr_i$ and the hypothesized TOAs $^jr_i^*$, i.e. the predicted TOAs $^jr_i^*$. The Permutation-Invariant Distance module calculates distances (and optionally gradients) between the measured TOAs $^jr_i$ and the hypothesized TOAs $^jr_i^*$ and forwards the respective distances to the Optimizer module, which optimizes the hypothesized TOAs $^jr_i^*$ such that the respective distance becomes small, i.e. a minimum distance is reached. Once the minimum distance is obtained, the method outputs the position of the aircraft $^j\underline{p}$. The initial set of hypothesized TOAs is chosen randomly in the area covered by the sensors. The global minimum of the residual norm is reached after optimization for about 20% of these random start positions.

Fig. 5 shows in more detail how, in one embodiment, the above mentioned modules may be implemented to obtain the position of the aircrafts $^j p$. As can be seen from Fig. 5, the aforementioned iterative technique, i.e. the Optimizer module, may be implemented using techniques like trust-region methods and preferably a Levenberg-Marquardt algorithm provided the distance measure has a quadratic form.

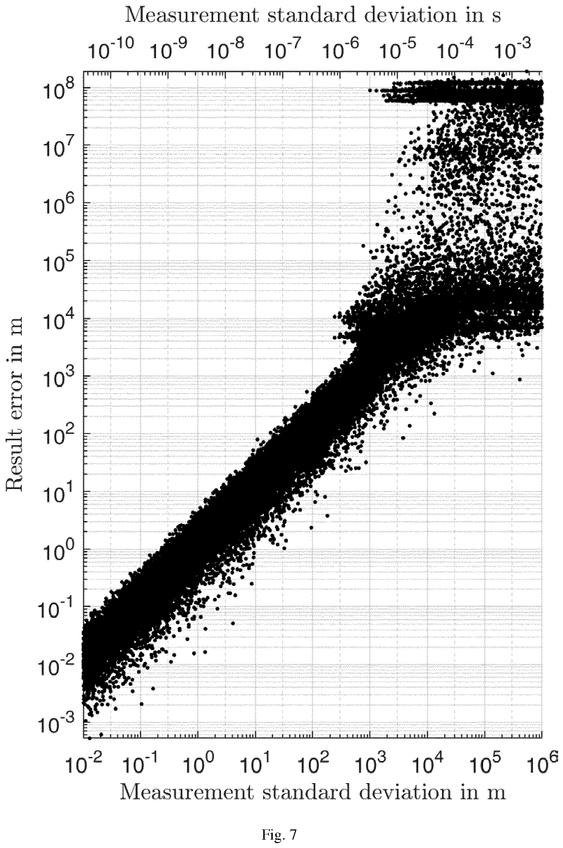

Fig. 7 shows, for a wide range of measurement errors, i.e. the standard deviation of the TOA measurements (labelled on the abscissa in meters as well as in seconds), how big the error of the estimated positions will be. The underlying true 2D aircraft and sensor positions are the same as seen in Fig. 2 and Fig. 3, which means there are two aircraft transmitting identical messages and five sensors receiving those two messages each with a probability of detection equal to one. When the TOA measurements are normal distributed with zero mean and a standard deviation of 10 ns. The obtained positions will then have an error between 0.034 m and 14.6 m.

The aforementioned Permutation-Invariant Distance module may be implemented by calculating the Wasserstein Distance between the measurements, which is the minimum distance or residual norm for any possible measurement-to-target association. Depending on the specific case, there are a couple of methods how to retrieve the measurement-to-target association such that the residual norm is smallest (that smallest residual norm is the Wasserstein Distance).

Assuming a probability of detection equal to one, i.e. the signal of every aircraft was correctly picked up by every receiving station, the calculated and the measured TOAs are sorted respectively and the earliest calculated TOA (hypothesized TOA) is assigned to the earliest measured TOA, the second earliest calculated TOA to the second earliest measured TOA and so on. Finally, their respective quadratic differences are summed up to obtain the residual norm equal to the Wasserstein Distance. Alternatively, although a slower method, may be trying out all possibilities, which sums up to $P! \cdot S$ cases, wherein $P$ is the number of targets and S is the number of receiving stations.

However, in reality not every message is picked up by every receiver station. Signals may get lost due to obstacles like mountains, or because of garbling, when messages from many aircraft overlap at the receiver. Then there may be a different number of calculated TOA and measured TOA. Nevertheless, they can still be sorted. There exist different possibilities on how to assign them such that the overall residual norm is minimal:

- All possibilities could be tried out. There are $\binom{P}{P-M} \cdot S = \frac{P!}{(P-M)! \cdot M!} \cdot S$ possibilities to try on the sorted set, or $\frac{P!}{M!} \cdot S$ possibilities on the unsorted set. (*P*, number of targets; *M*, number of measurements, *S*, number of receiving stations.)

- The optimal measurement-target association can equally be determined with known association optimization algorithms like the Hungarian Algorithm or the Auction Algorithm. The association problem could also be solved with more general but slower methods from linear optimization, like the simplex algorithm.

- In the special case of $P = 1$ or $M = 1$, the best match can be selected by finding the minimum of a vector of length $M$ or $P$, respectively.

It may also be possible to weight the individual calculated/measured TOA deviations according to each measurement's quality.

If the number of targets is not known *a priori,* the entire algorithm can be executed successively under the assumption $P = 1$, then $P = 2$, then $P = 3$ and so on, until a solution is found with a residual norm which is expected based on the measurement noise, and with an appropriate estimated uncertainty of the solution.

If clutter is present, i.e. erroneous measurements not stemming from any of the targets, only the best matching TOA deviations of the sensors, e.g. 5 sensors, could be taken into account. Or one more aircraft could be included into the model, like $P = 4$, and discarding, i.e. not showing, its (errorneous) location to the user later.

In general, the method has to hypothesize all $P$ aircraft and then get a quality measure of that specific target arrangement.

If one wants to evaluate the distance measure on a grid (for making a human-readable plot or for finding suitable initial points), then some simplification may be introduced.

One possibility for such a simplification may be to assume that there is only one aircraft, and all other measurements are clutter. Then, at each receiver there is only one expected measurement, and for the distance measure one just takes the distance of the one expected measurement to the closest real measurement.

This may be done at every sensor, and only the 4 or more sensors, e.g. 5 or 6 sensors, where this nearest-neighbor-distance was smallest, is taken into account in the end.

This is then a lower bound for the permutation-invariant distance of any aircraft at this location. This can then be repeated on a grid in the whole monitored area.

In general, per aircraft, there are four unknowns: the location (*x, y, z*) and the "offset", the time when the aircraft sent its message *b*. So in principle, four messages are necessary to set up four equations that can then be solved exactly for the four unknowns. For five unknowns, the equation system cannot be solved anymore exactly, and the least squares error / residual norm is minimized instead (the sum of the squared "non-fulfillment" of each equation).

In the case of an additional (fifth) unknown, which may be the measurement-to-aircraft association, a fifth measurement is necessary to assess the possible associations based on the residual norm (the "non-fulfillment" of the not exactly solved equation system).

In practical evaluation examples, also many positions based on four measurements are reasonable. When previous knowledge about the aircraft position is included, also less than four measurements can improve the position estimation.

The aforementioned unknowns relate to 3D localization. When 2D localization is concerned, only three unknowns (*x, y, b*), plus the association ambiguity are present, so in this case four measurements are sufficient.

In practical evaluation examples, also many positions based on three measurements are reasonable for 2D localization. When previous knowledge about the aircraft position is included, also less than three measurements can improve the position estimation.

Since the Levenberg-Marquardt optimization might not find the global optimum from every initial point if the problem is not convex, a number of starting points may be chosen randomly and the depth of the "valleys" that have been found in the individual passes may be compared.

In addition, it may also be possible to employ an "educated guess" where to put the starting points, which may save computational cost. For example, the educated guess may be based on information from the past about the target's position, velocities, accelerations, and/or curve radii, or on the simplified permutation-invariant distance function.

From the residual errors, the invention may now identify with high confidence the location of the real signal sources, i.e. the targets. This is demonstrated in the example shown in Figs. 6a and 6b. As can be seen from Figs. 6a the simplified residual norm is lowest at the position of the aircrafts 101, 102, which is also reflected in the respective diagram of Fig. 6b, where the respective position of the aircrafts 101, 102 correlates with the two smallest minima. Note that the simplified permutation-invariant distance measure has been employed here, because the parameter space of two aircraft in 2D is at least four-dimensional, which cannot be visualized. The simplified distance is a lower bound of the full permutation-invariant distance disclosed herein.

The acurracy of the resulting target locations may now be estimated using the accuracy of the measurements they are based on. The nonlinear measurement equation, which now includes an additive noise term $v_i$ can be written for each sensor measurement $r_i$ individually, and below in vector form $\underline{r}$ for all the measurements that are associated to this target. Thereby the vector-valued nonlinear measurement function $h(\underline{x})$ is defined.

$$r_i = \left\| \underline{p} - \underline{s_i} \right\| + b + v_i$$

$$\Leftrightarrow \quad \underline{r} = h\left(\underline{x}\right) + \underline{v}$$

This nonlinear equation system may be linearized around the estimated location such that

$$\underline{\Delta r} = \mathbf{H}\underline{x} + \underline{v}$$

with $\underline{x} = [p_x, p_y, p_z, b]^T$ and $\underline{r} = [r_1, r_2, \dots, r_s]^T$ and $\underline{v} = [v_1, v_2, \dots, v_s]^T$ and

$$\mathbf{H} = \frac{\partial h(\underline{x})}{\partial \underline{x}} = \begin{bmatrix} \dfrac{p_x - s_{1x}}{\left\| \underline{p} - \underline{s_1} \right\|} & \dfrac{p_y - s_{1y}}{\left\| \underline{p} - \underline{s_1} \right\|} & \dfrac{p_z - s_{1z}}{\left\| \underline{p} - \underline{s_1} \right\|} & 1 \\ \vdots & \vdots & \vdots & \vdots \\ \dfrac{p_x - s_{Sx}}{\left\| \underline{p} - \underline{s_S} \right\|} & \dfrac{p_y - s_{Sy}}{\left\| \underline{p} - \underline{s_S} \right\|} & \dfrac{p_z - s_{Sz}}{\left\| \underline{p} - \underline{s_S} \right\|} & 1 \end{bmatrix}.$$

When the covariance $\mathbf{C}^v$ of $\underline{v}$ is given, we can now estimate the covariance $\mathbf{C}^e$ of the estimated location p.

$$\mathbf{C}^e = (\mathbf{H}'(\mathbf{C}^v)^{-1}\mathbf{H})^{-1}$$

The matrix to be inverted may be singular. To avoid inverting a singular matrix, it can be regularized with a diagonal matrix $\mathbf{C}^p = \sigma_p^2 \mathbf{I}$ where $\sigma_p^2$ is a large constant.

$$\mathbf{C}^e \approx (\mathbf{H}'(\mathbf{C}^v)^{-1}\mathbf{H} + (\mathbf{C}^p)^{-1})^{-1}$$

The trace of $\mathbf{C}^e$ is a measure of the unreliability of the estimation result, as it indicates how susceptible the estimation result is with respect to measurement errors. (In the regularized case, it is bounded to $4\sigma_p^2$, so $\sigma_p^2$ may be chosen such that any result with an unreliability bigger than $4\sigma_p^2$ is unusable anyway.) The posterior covariance $\mathbf{C}^e$ will be large (even though $\mathbf{C}^v$ may be small) when the estimated location is based on only few measurements, or when the current relative location of target and sensors is bad for multilateration.

As apparent from the foregoing description, a key advantage of the invention is that it can operate on single transmission events from each signal source and uses only the TOA of those signals at the receiving stations, wherein synchronized clocks at the receiving stations may be employed. The process does not require signal strength (generally a poor discriminator) or signal direction (generally not available in a multilateration system). Additionally, the process does not require prior knowledge of previous timing or position measurements. However, the process does not preclude the use of any of these other discriminators for further refinement of position measurement or ambiguity resolution.

Although the present invention has been described based on embodiments, this should not in any way restrict the scope of the invention. It will be understood by a person skilled in the art, that various modification to the embodiments are possible without departing from the scope of the present invention as defined by the claims.

In addition, it is clear for a skilled person that certain features only described with reference to one specific embodiment may be combined with other features of another embodiment. Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively.

**Claims**

1. A method for determining the location of at least one target among a plurality of targets sending messages without unique identifiers for relating a message to a respective target, wherein the method comprises the steps of:

   receiving a plurality of said messages from the at least one target by at least two sensors at known locations (s1 to sS);
   obtaining time of arrival measurements (m1 to mP) from the received messages;
   obtaining at least one initial hypothetical location of the at least one target;
   calculating expected time of arrival measurements (em1 to emP) at each sensor based on the at least one initial hypothetical location of the at least one target, the sensor locations, and the propagation velocity of the messages;
   determining the deviation between the expected time of arrival measurements (eml to emP) and the time of arrival measurements (m1 to mP) obtained from the received messages at each sensor based on a permutation-invariant distance measure;
   determining the location of the at least one target by modifying the at least one initial hypothetical location of the at least one target to minimize the permutation invariant distance measure between the time of arrival measurements (m1 to mP) and the expected time of arrival measurements (eml to emP).

2. The method of claim 1, wherein the time of arrival measurement is selected from one or more of the following: time of arrival of an electromagnetic wave, time of arrival of a light pulse, time of arrival of an acoustic wave.

3. The method of claim 1 or 2, wherein the permutation-invariant distance measure is selected from any one or a combination of the following: Wasserstein distance, calculated by testing all permutations combinatorically or sorting of the measurements or using the Hungarian algorithm or the Auction algorithm or the simplex algorithm; and Localized Cumulative Distribution (LCD) distance; and local nearest neighbor distance; and OSPA metric; and bounded distance; and cropped distance.

4. The method of any one of claims 1 to 3, wherein minimizing the permutation invariant distance measure comprises any one or a combination of the following methods: analytical closed-form solution, Newton algorithm, Gauss-Newton algorithm, quasi-Newton method, Levenberg-Marquardt algorithm, Sequential Quadratic Programming, Active-Set algorithm, Trust-Region algorithms, Interior-Point algorithm, and Nelder-Mead method.

5. The method of any one of claims 1 to 4, wherein the at least one initial hypothetical location is selected by any one or a combination of the following methods: random, deterministic grid, and past target positions.

6. The method of any one of claims 1 to 5, wherein if the number of targets is unknown, obtaining the at least one initial hypothetical location comprises a step of simplifying the permutation-invariant distance measure, wherein only one target location and a limited number of the at least two sensors are taken into account to obtain a lower bound for the permutation-invariant distance measure.

7. The method of any one of claims 1 to 5, wherein if the number of targets is unknown, the method is repeated for any number of targets.

8. The method of any one of claims 1 to 7, further comprising estimating the uncertainties of the time of arrival measurements (m1 to mP) and projecting the estimated uncertainties to the determined locations of the at least one target to obtain an estimate of the accuracy of the determined location of the at least one target.

9. The method of claim 8, wherein estimating and projecting the uncertainties comprises any of the following: Monte Carlo simulation, stochastic sampling, deterministic sampling, Cramér Rao bound, and based on a linearization with the Jacobi matrix.

10. The method of any one of claims 1 to 9, wherein the permutation-invariant distance measure comprises comparing two sets of time of arrival measurements (m1 to mP) that have a different number of entries to account for missing measurements.

11. The method of any one of claims 1 to 10, wherein the method further comprises obtaining clutter measurements in addition to the time of arrival measurements (m1 to mP), wherein the permutation-invariant distance measure comprises not associating the clutter measurements to any target, or alternatively associating the clutter measurements to a non-existing virtual target, wherein the method determines the location of the virtual target in the same manner as the at least one target and wherein the location of the virtual target is discarded based on an obtained residual norm or a number of clutter measurements it is based on.

12. The method of any one of claims 1 to 11, wherein determining the location of the at least one target further comprises minimizing the distance between the determined location of the at least one target and at least one target position predicted based on any information from the past about the target's positions, velocities, accelerations, and/or curve radii.

13. The method of any one of claims 1 to 12, wherein the at least two sensors are three or more sensors, preferably four or more sensors, for 2D localization and four or more sensors, preferably five or more sensors, for 3D localization.

14. A computer program product comprising instructions which, when the program is executed by a computer, cause the computer to carry out the steps of the method of any one of claims 1 to 13.

Fig. 1 (prior art)

Fig. 2

Fig. 3

Fig. 4

Fig. 5

Fig. 6a

Fig. 6b

Fig. 7

Europäisches
Patentamt

European
Patent Office

Office européen
des brevets

# EUROPEAN SEARCH REPORT

**Application Number**

EP 18 21 4798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/017555 A2 (SENSIS CORP [US]; PERL ELYAHU [US]; GERRY MICHAEL J [US]) 24 February 2005 (2005-02-24) * page 26 - page 30; figure 11 * | 1-14 | INV. G01S5/14 ADD. G01S5/16 G01S5/30 |
| A,D | US 6 704 692 B1 (BANERJEE SUBHANKAR [US] ET AL) 9 March 2004 (2004-03-09) * the whole document * | 1-14 | |
| A,D | US 2008/111730 A1 (DING ZHEN [CA] ET AL) 15 May 2008 (2008-05-15) * the whole document * | 1-14 | |
| A | WANG JIE-GUI ET AL: "Passive tracking based on data association with information fusion of multi-feature and multi-target", NEURAL NETWORKS AND SIGNAL PROCESSING, 2003. PROCEEDINGS OF THE 2003 INTERNATIONAL CONFERENCE ON NANJING, CHINA DEC. 14-17, 2003, PISCATAWAY, NJ, USA,IEEE, 14 December 2003 (2003-12-14), pages 686-689Vol.1, XP032190450, DOI: 10.1109/ICNNSP.2003.1279367 ISBN: 978-0-7803-7702-8 * the whole document * | 1-14 | |

| | | | TECHNICAL FIELDS SEARCHED (IPC) |
|---|---|---|---|
| | | | G01S |

The present search report has been drawn up for all claims

| Place of search | Date of completion of the search | Examiner |
|---|---|---|
| Munich | 24 June 2019 | Ribbe, Jonas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 671 255 A1

## ANNEX TO THE EUROPEAN SEARCH REPORT
## ON EUROPEAN PATENT APPLICATION NO.

EP 18 21 4798

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2019

| Patent document cited in search report | | Publication date | Patent family member(s) | | | Publication date |
|---|---|---|---|---|---|---|
| WO 2005017555 | A2 | 24-02-2005 | AU | 2004265974 | A1 | 24-02-2005 |
| | | | CA | 2532050 | A1 | 24-02-2005 |
| | | | DK | 1654561 | T3 | 22-10-2012 |
| | | | EP | 1654561 | A2 | 10-05-2006 |
| | | | HK | 1107593 | A1 | 12-11-2010 |
| | | | JP | 4644197 | B2 | 02-03-2011 |
| | | | JP | 2007502414 | A | 08-02-2007 |
| | | | PT | 1654561 | E | 24-10-2012 |
| | | | US | 2005035897 | A1 | 17-02-2005 |
| | | | WO | 2005017555 | A2 | 24-02-2005 |
| US 6704692 | B1 | 09-03-2004 | NONE | | | |
| US 2008111730 | A1 | 15-05-2008 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6704692 B1
- US 20080111730 A1
- US 5454720 A
- US 7132982 B2